# EUROPEAN PATENT APPLICATION

(11) **EP 1 227 664 A1**
(43) Date of publication of application: **31.07.2002**
(21) Application number: 02250341.1
(22) Date of filing: 18.01.2002
(51) Int. Cl.: H04N 3/15

(54) **Photosensor array using segmented charge transfer gates to improve processing time for small images**

(30) Priority: 25.01.2001 US 769721
(71) Applicant: Hewlett-Packard Company, Palo Alto, CA 94304 (US)
(72) Inventor: Spears, Kurt E., Fort Collins, CO 80525 (US); Franz, Douglas L., Fort Collins, CO 80525 (US)
(74) Representative: Jackson, Richard Eric

(57) **Abstract**

A photosensor assembly has charge transfer gates (104, 202, 208, 306, 310, 402, 410) that are segmented into multiple sections (A, B, C, D). Individual sections can be controlled. For a small image, only the appropriate sections of the charge transfer gates are used to transfer charges from the photosensors to charge shift registers (102, 204, 210, 308, 404). The charge shift registers shift the charges toward a node for analog-to-digital conversion. When all the charges have been shifted beyond the appropriate sections of the charge transfer gates, the sections of the charge transfer gates can be activated again. As a result, multiple scanlines of the small image may be multiplexed onto the charge shift register. In the steady state, only the charges from a small section of the image are converted, thereby reducing processing time. Excess charges in photosensors that are not being used are drained into overflow drains (108, 302, 314, 408).

## Description

### FIELD OF INVENTION

This invention relates generally to photosensor arrays used for optical image scanners and cameras, and more specifically to line arrays commonly used for optical image scanners.

### BACKGROUND OF THE INVENTION

Image scanners convert a visible image on a document or photograph, or an image in a transparent medium, into an electronic form suitable for copying, storing or processing by a computer. An image scanner may be a separate device or an image scanner may be a part of a copier, part of a facsimile machine, or part of a multipurpose device. Reflective image scanners typically have a controlled source of light, and light is reflected off the surface of a document, through an optics system, and onto an array of photosensitive devices. The photosensitive devices convert received light intensity into an electronic signal. Transparency image scanners pass light through a transparent image, for example a photographic positive slide, through an optics system, and then onto an array of photosensitive devices.

In general, image scanners use an optical lens system to focus an image onto an array of photosensors. For line arrays of photosensors, the line array, in conjunction with the scanner optics system, defines a scanline on the document being scanned. Photosensor arrays typically have thousands of individual photosensitive elements. Each photosensitive element, in conjunction with the scanner optics system, measures light intensity from an effective area on the document defining a picture element (pixel) on the image being scanned.

Common photosensor technologies include Charge Coupled Devices (CCD), Charge Injection Devices (CID), Complementary-Metal-Oxide (CMOS) devices, and solar cells. Typically, for a CID or a CMOS array, each photosensitive element is addressable. In contrast, CCD line arrays commonly serially transfer all the charges, bucket-brigade style, from each line array of photosensitive elements to a small number of sense nodes for conversion of charge into a measurable voltage. The present patent document is primarily concerned with photosensor arrays having serial charge shift registers, also called charge transfer registers or serial readout registers.

Sometimes, a document, or photograph, or other image being scanned, is substantially smaller than the maximum size that the scanner is capable of scanning. For example, a scanner capable of scanning a document that is about 220 mm wide may be used to scan a film negative or slide that is about 35 mm wide. Alternatively, a scanner capable of scanning U.S. "B" size documents or Metric A3 documents, may also routinely be used to scan U.S. "A" size documents or Metric A4 documents. Finally, scanners commonly provide a preview function, where an entire page is scanned at a low resolution, and a scanner operator then selects a small portion of the page for a final scan at high resolution.

Typically, the scanner converts charges to digital values for the maximum number of pixels in a scanline, and then discards the unwanted digital values. A substantial amount of time is spent generating digital data that is never used. For high-resolution scanning of small images or small portions of a page, scanning speed may be limited by conversion of data that is never used. There is a need for decreasing the time required for scanning an area having a width that is relatively small compared to the maximum scan width for a scanner.

### SUMMARY OF THE INVENTION

A photosensor assembly has charge transfer gates that are segmented into multiple sections. Individual sections can be controlled. For a small image, only the appropriate sections of the charge transfer gates are used to transfer charges from the photosensors to charge shift registers. The charge shift registers shift the charges toward a node for analog-to-digital conversion. When all the charges have been shifted beyond the appropriate sections of the charge transfer gates, the appropriate sections of the charge transfer gates can be activated again. As a result, multiple partial scanlines may be multiplexed onto the charge shift register. In the steady state, only the charges from a small section of the image are converted, thereby reducing processing time. If overall scanning time is limited by exposure time, then the shift rate can be decreased as a result of shifting fewer charges, thereby improving charge transfer efficiency. Accumulated charges in photosensors that are not being used are drained into overflow drains.

### BRIEF DESCRIPTION OF THE DRAWINGS

Figures 1A - 1C are block diagrams of a photosensor assembly with a segmented charge transfer gate in accordance with the invention.
Figure 2 is a block diagram of an alternative configuration for a photosensor assembly in accordance with the invention.
Figure 3A and 3B are block diagrams of an additional alternative configuration for a photosensor assembly in accordance with the invention.
Figures 4A and 4B are block diagrams of additional alternative configurations for segmented charge transfer gates in accordance with the invention.

### DETAILED DESCRIPTION OF THE PREFERRED EMBODIMENT OF THE INVENTION

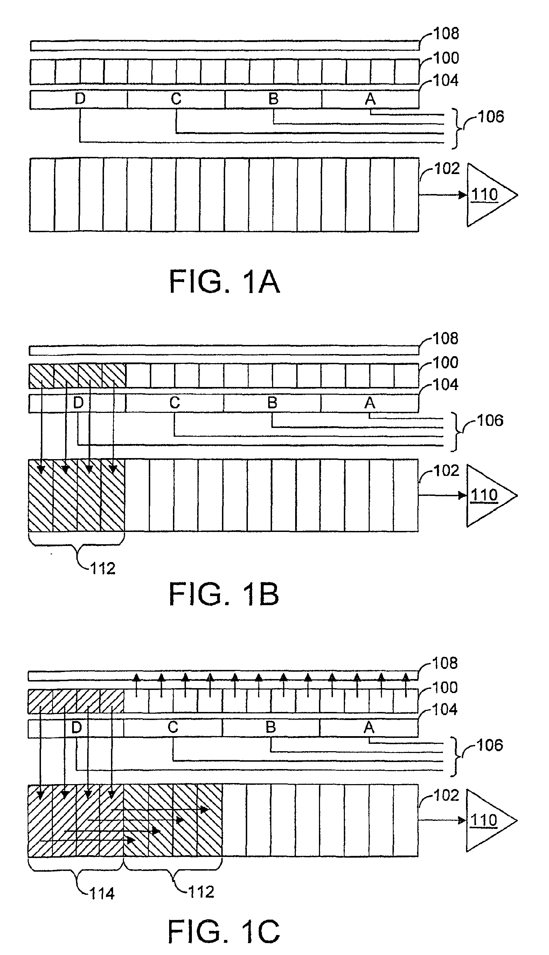

In figure 1A, a photosensor assembly includes a line array of photosensors 100, and a charge shift register 102. A charge transfer gate 104 is segmented into multiple sections. As depicted in the example of figure 1A, the charge transfer gate 104 is segmented into four equal-length sections, labeled A, B, C, and D, with each section separately controllable by control lines 106. After exposure, control of the sections of the charge transfer gate 104 determines which charges from the line array of photosensors are transferred to the charge shift register 102. For example, all four sections of the charge transfer gate 104 may be activated, so that the maximum width scanline is captured, or half the width may be captured, or any other combination of fourths. With repeated exposures, photosensors having charge that is not transferred will saturate, and charge may overflow to adjacent photosensors. In figure 1A, a lateral overflow drain 108 prevents excess charge from accumulating. In figure 1A, charges in the charge shift register 102 are shifted to an amplifier 110 for analog-to-digital conversion (A/D converter not illustrated).

Assume that only one-fourth of the available scanline width is actually needed. In figure 1B, only one section (section D) of the charge transfer gate 104 is activated, and a block of charges comprising one-fourth of the charges (112) from the line array 100 are transferred to the charge shift register 102. The remaining stages in the charge shift register are not affected by this transfer, and are discussed in more detail below. The charge shift register 102 shifts the charges 112 to the amplifier 110 for A/D conversion.

In figure 1C, during a second exposure, charges in the charge shift register 102 are shifted toward the amplifier 110. After four shifts, the charge shift register 102 is ready to receive another block of charges from the line array 100. One section (section D) of the charge shift register is again activated, and a block of charges 114 comprising one-fourth of the charges from the photosensor array 100 are transferred to the charge shift register 102. As discussed above, accumulated charges in the remainder of the photosensor array 100 are drained to the overflow drain 108. Note that charges from two different exposures are now multiplexed into the charge shift register 102. In the example illustrated in figure 1C, if the image of interest is in the charge shift register stages that are the greatest distance from the amplifier, then four partial scanlines, from a small image contained in the one-fourth scanline being captured, can be multiplexed onto the charge shift register 102.

Once charges that are transferred into the charge shift register 102 reach the end closest to the amplifier, one-fourth of the charges in the charge shift register are being processed while the next scanline is being exposed. Therefore, in the steady state, processing time (which consists of shift time and A/D conversion time) is reduced to about one-fourth of the processing time required for full width scanlines. Note that with a charge transfer gate divided into four equal-length sections, once transferred charges reach the amplifier, processing time is reduced to about one-fourth of the processing time required for full width scanline, regardless of which section of the charge transfer gate is used. The only variable is how many partial scanlines are multiplexed. For example, if only section A of the charge shift register is used, then processing time is reduced by about a factor of four, with no multiplexing. If only section B of the charge shift register is used, then processing time is reduced by about a factor of four, with two partial scanlines multiplexed.

Typically, charges for one exposure are being processed during the subsequent exposure. Overall scanning time may be limited by processing time or exposure time. If overall scanning time is limited by exposure time, then decreasing processing time does improve overall scanning time. However, segmented charge transfer gates may also be used to improve accuracy. Charge Transfer Efficiency (CTE) is the fraction of a charge that is transferred during one shift cycle. Total Transfer Efficiency (TTE) is a measure of the total charge remaining in a shift register stage after being clocked through the entire shift register. Low CTE and TTE values result in smearing, where light areas of an image tend to smear into dark areas. CTE and TTE are affected by shift time, and in particular, CTE and TTE improve with longer shift times. With segmented charge transfer gates, fewer charges are processed during the next exposure time, so the clock rate for the charge transfer gate can be decreased, thereby improving CTE and TTE. In some configurations, both benefits may be obtained. For example, in a hypothetical scanner, assume that for full width scans the processing time for each scanline is twice the exposure time. Use of a four-segment charge transfer gate can reduce processing time by a factor of four, thereby making the exposure time twice the processing time. The shift rate can then be reduced by a factor of two, making processing time and exposure time equal, with the end result that scanning time is improved by a factor of two, and CTE and TTE are also improved.

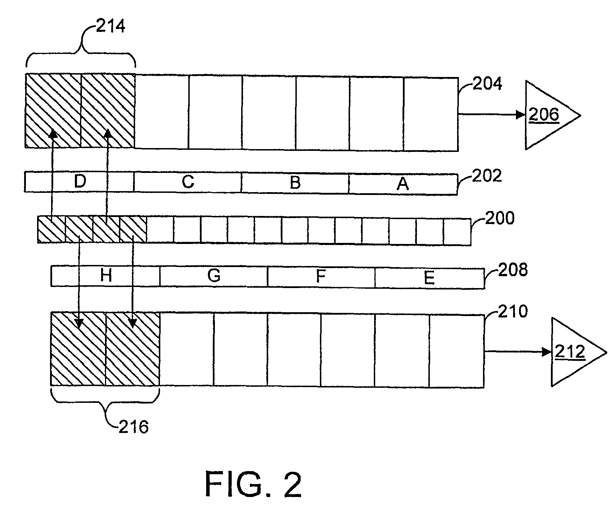

It is known to provide two charge shift registers for one photosensor line array. The arrangement is sometimes called bilinear readout. Typically, even numbered photosensors transfer charge to a first charge shift register and odd numbered photosensors transfer charge to a second charge shift register. Then, shifting and analog-to-digital conversion time is cut in half by shifting and converting in parallel. Figure 2 illustrates use of bilinear readout with segmented charge transfer gates in accordance with the invention. In figure 2, a line array 200 transfers charges, through a first charge transfer gate 202, to a first charge shift register 204, and through a second charge transfer gate 208, to a second charge shift register 210. Charge shift register 204 shifts charges to amplifier 206, and charge shift register 210 shifts charges to amplifier 212. Again, as in figures 1A - 1C, charge transfer gates 202 and 210 are segmented into four equal-length sections. As depicted in figure 2, one-fourth of the charges in line array 200 are transferred to charge shift registers 204 and 210. Within each charge shift register, there is a block of charges (214, 216) that can be multiplexed with charges from successive scanlines. In the example of figure 2, if one-fourth of the charges are transferred, in the steady state after transferred charges reach the amplifiers, one-fourth of the charges in the charge shift registers are being processed while the next scanline is being exposed. Therefore, processing time is reduced to about one-fourth of the processing time required for full width scanlines. Note that in the configuration illustrated in figure 2, there is no room for lateral overflow drains adjacent to the photosensor line array. Accordingly, vertical overflow drains may be implemented beneath the photosensor line array.

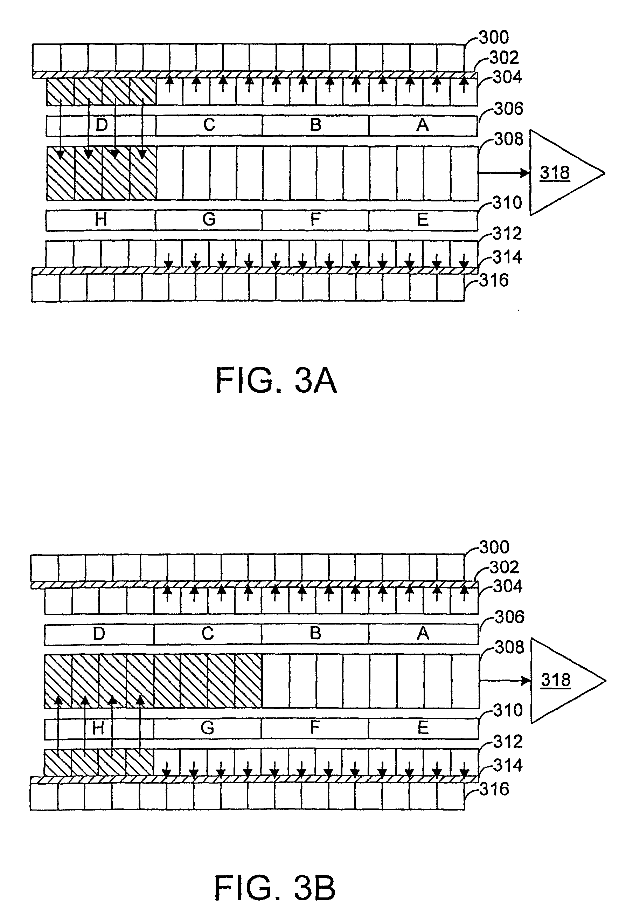

It is known to stagger CCD photosensors (alternate photosensor elements are offset in opposite directions from a centerline, and offset in a direction parallel to the centerline) to increase sampling rate while maintaining photosite size. Staggered photosensors typically require dual-sided charge shift registers (one charge shift register on each side of the staggered line array). Figures 3A and 3B illustrate an alternative configuration, with staggered CCD arrays, in which rows of photosensors from two different staggered line arrays share a charge shift register. Sharing a charge shift register is the subject of a separate patent application. However, the configuration in figures 3A and 3B also includes segmented charge transfer gates in accordance with the invention.

In figure 3A, two rows of photosensors (300 and 304) share a lateral overflow drain 302. Photosensor row 300 is staggered relative to photosensor row 304. Two additional rows of photosensors (312 and 316) share a lateral overflow drain 314. Photosensor row 312 is staggered relative to photosensor row 316. Photosensor rows 304 and 312 share a charge shift register 308. Charge shift registers for photosensor rows 300 and 316 are not illustrated. Photosensor row 304 transfers charges, through a charge transfer gate 306, to the charge shift register 308. Photosensor row 312 transfers charges, through a charge transfer gate 310, to the charge shift register 308. For illustration purposes, charge transfer gates 306 and 310 are divided into four equal-length sections. Charges in the charge shift register 308 are shifted to an amplifier 318.

In operation, the charge shift register 308 is used twice for each exposure. For example, as depicted in figure 3A, for one exposure, photosensor row 304 may transfer a block of charges to the charge shift register 308 first. Then, as depicted in figure 3B, after the charges from photosensor row 304 are shifted, photosensor row 312 may transfer a block of charges to the charge shift register 308. With segmented charge transfer gates, the charges from photosensor rows 304 and 312 may be multiplexed. In the example of figures 3A and 3B, if the image of interest is in the photosensors corresponding to the charge shift register stages that are the greatest distance from the amplifier 318, then four partial scanlines (two from photosensor array 304, and two from photosensor array 312) can be multiplexed onto the charge shift register 308. In the example of figures 3A and 3B, if one-fourth of the charges are transferred, in the steady state after transferred charges reach the amplifier, one-half of the charges in the charge shift register are being processed during the next exposure. Note that processing time is still reduced by a factor of four, because for full-width scanlines, the charge shift register 308 must be emptied twice while the next scanline is being exposed.

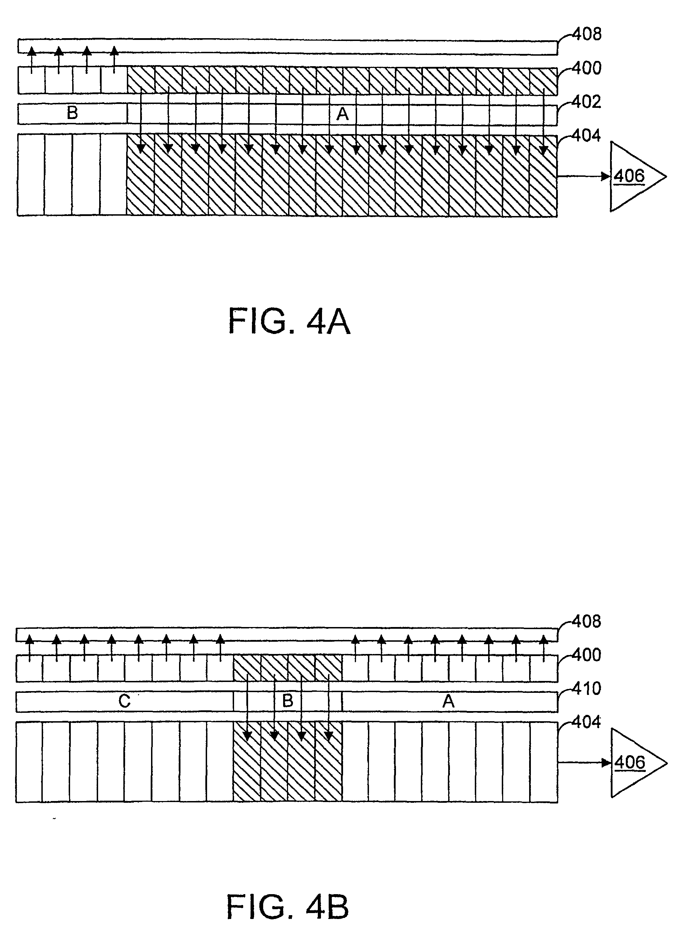

Figures 4A and 4B illustrate example configurations in which segmented charge transfer gates have sections with unequal lengths. In figure 4A, a row of photosensors 400 transfers charges, through a charge transfer gate 402, to a charge shift register 404. Excess charges from the photosensors are drained to an overflow drain 408. The charge transfer gate 402 is divided in two sections, labeled A and B. Section A is longer than section B. A specific example is a scanner capable of scanning U.S. "B" size documents or metric A3 documents, where the scanner is also routinely used to scan U.S. "A" size documents or metric A4 documents. For example, section A may correspond to a partial-width scanline having a width of about 8.5 inches (U.S. size "A"), or about 210 mm (metric A4). Sections A plus B combined may correspond to a full-width scanline having a width of about 11.0 inches (U.S. size "B"), or about 297 mm (metric size A3). In the embodiment illustrated in figure 4A, narrow documents (U.S. "A" or metric A4) are placed so that resulting charges are transferred by section A of the charge transfer gate 402. For wider documents, both sections A and B of the charge transfer gate 402 are enabled.

Figure 4B has the same overall configuration as figure 4A, except the charge transfer gate is segmented into three sections, labeled A, B, and C. Section B is smaller than sections A and C, and section B is located near the center of the overall scanline. A specific example is a scanner capable of scanning full width documents, but is also used to scan 35 mm slides or film negatives. Some light sources commonly used in optical image scanners, for example fluorescent lamps, are brighter near the center of the lamp than at the ends of the lamps. Accordingly, for such lamps, it is preferable to place slides or other small images near the center of the illumination. In figure 4B, section B of the charge transfer gate 410 is located near the center of the charge transfer gate. For full-width scanlines, all three sections (A, B, and C) of the charge transfer gate may be used. For slides and film negatives, just section B may be used. Of course, all other combinations (A, C, A+B, B+C) are also possible.

As an alternative to segmented charge transfer gates, for reducing processing time for small images, unwanted charges could be shifted at a higher than normal shift rate, simply discarding unwanted charges with no analog-to-digital conversion. In particular, if charges are not needed, signal settling times, amplifier delays, and analog-to-digital conversion time can be ignored, and processing time is just the time required to transfer and shift. In the following discussion, this technique will be referred to as "rapid-shift". For example, in figure 1B, between charges 112 and the output amplifier, there are 12 charges that are not needed. Similarly, in figure 4B, there are eight charges ahead of the charges of interest, and eight charges after the charges of interest, that are not needed. In general, with small images, rapid-shift can substantially reduce overall processing time. However, as shown below, multiplexing reduces processing time even more, by eliminating the time required to shift unwanted charges.

In the follow discussion, for each of the example configurations of figures 1A - 1C, 2, 3A-3B, 4A, and 4B, processing times are compared for: (1) conventional photosensor assemblies without segmented charge transfer gates, and with normal shifting speeds; (2) rapid-shift, and (3) use of segmented charge transfer gates. Let N = number of photosensors per row, Tₛ = time to shift from one stage of the charge shift register to the next stage, and T_{c} = analog-to-digital conversion time for one voltage measurement, including some signal settling time. Typically, charges are transferred once in parallel, and then shifted and converted serially. Given a large number of pixels, the one charge transfer time is relatively insignificant compared to total shift time and total A/D conversion time. After exposure, the total time required to process one scanline in conventional configurations is then approximately N*(T_{*S*} + T_{*C*}). If N increases, and all other parameters remain constant, then the time required to process each scanline increases. Typically, one scanline is being exposed while the previous scan line is being converted. The following specifications do not necessarily correspond to any particular commercially available photosensor array, but are representative of the technology: assume N= 10,000, Tₛ = 100 nsec, T_{c} = 300 nsec.

First, consider a configuration as in figures 1A - 1C, but with 10,000 photosensors. For a conventional prior art assembly, without segmented charge transfer gates, processing time per scanline is approximately 10,000*(100+300)*10⁻ ⁶ msec = 4.0 msec. If one-fourth of the charges are needed, and the needed charges are at the greatest distance from the amplifier, for rapid-shift, the processing time is approximately 7,500*(100)*10⁻⁶ msec + 2,500*(100+300)*10⁻⁶ msec = 1.75 msec. With segmented charge transfer gates, with four equal-length sections as illustrated, in the steady state, processing time is 2,500*(100+300)*10⁻⁶ msec = 1.0 msec.

Next, consider a configuration as in figure 2, but with 10,000 photosensors. With conventional processing, processing time is cut in half to 2.0 msec, because of the parallel charge shift registers and parallel analog-to-digital conversion. Similarly, with rapid-shift, total processing time relative to conventional processing is cut in half to 0.875 msec. With segmented charge transfer gates, in the steady state, processing time is 1,250*(100+300)*10⁻⁶ msec = 0.5 msec.

Next, consider a configuration as in figures 3A-3B, but with 5,000 photosensors for each half of each pair of staggered rows. For conventional processing, the charge shift register must be emptied twice, for 10,000 total charges, so processing time is the same as for a conventional array (4.0 msec). Similarly, processing time for rapid-shift is 1.75 msec, and processing time with segmented charge transfer gates is 1.0 msec.

Next, consider a configuration as in figure 4A, but with section A transferring charges for 7,500 photosensors, section B transferring charges for 2,500 photosensors, and an image of interest that is in the 7,500 charge shift register stages closest to the amplifier. For conventional processing, all 10,000 charges must be processed, so the total processing time is approximately 4.0 msec. For rapid-shift, the total processing time is approximately 7,500*(100+300)*10⁻⁶ msec + 2,500*(100)*10⁻⁶ msec = 3.25 msec. With a segmented-gate as illustrated, total processing time is approximately 7,500*(100+300)*10⁻⁶ msec = 3.0 msec.

Finally, consider a configuration as in figure 4B, but with sections A and C each transferring charges for 4,000 photosensors, and section B transferring charges for 2,000 photosensors, with an image of interest that is in the 2,000 photosensors corresponding to section B of the charge transfer gate. For conventional processing, all 10,000 charges must be processed, so the total processing time is approximately 4.0 msec. For rapid-shift, the total processing time is approximately 2,000*(100+300)*10⁻⁶ msec + 8,000*(100)*10⁻⁶ msec = 1.6 msec. With a segmented-gate as illustrated, total processing time in the steady state is approximately 2,000*(100+300)*10⁻⁶ msec = 0.8 msec.

In summary, charge transfer gates can be divided into equal-length sections, or non-equal-length sections, with each section separately controllable. In general, for equal-length or non-equal-length sections, segmented charge transfer gates enable a decreased scanning time for small partial scanlines within longer scanlines, and improved signal accuracy (improved charge transfer efficiency). Given a charge transfer gate that is divided into M equal-length sections, processing time can be reduced to 1/M times the conventional processing time. The location of the image within the charge shift register affects how many partial scanlines are multiplexed, but not the steady state processing time. When segmented charge transfer gates are compared to rapid-shift, segmented charge transfer gates can eliminate the time required to shift unwanted charges.

The foregoing description of the present invention has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A method of scanning, comprising:
exposing, an array of photosensors (100, 200), to light, a first time;
transferring charges (112, 214, 216), from a block of photosensors in the array of photosensors, to a charge shift register (102, 204, 210), wherein the block comprises less than all the photosensors, and only the charges from the block are transferred;
exposing, the array of photosensors, to light, a second time;
transferring charges (114), from the block of photosensors in the array of photosensors, to the charge shift register, where only the charges from the block are transferred, so that charges from the block of photosensors, from more than one exposure, are multiplexed onto the charge shift register.

2. The method of claim 1, the steps of transferring charges further comprising:
transferring charges (112, 114) from a block of contiguous photosensors.

3. The method of claim 1, the steps of transferring charges further comprising:
transferring charges (214, 216) from alternate photosensors within a block of contiguous photosensors.

4. The method of claim 1, further comprising:
shifting charges, within the charge shift register, at a lower than normal shift rate.

5. A method of scanning, comprising:
exposing, a first and second array of photosensors (304, 312), to light, a first time; transferring charges, from a first block of photosensors in the first array (304) of photosensors, to a charge shift register (308), wherein the first block comprises less than all the photosensors in the first array of photosensors, and only charges from the first block are transferred;
transferring charges, from a second block of photosensors in the second array of photosensors (312), to the charge shift register, where only the charges from the second block are transferred, so that charges from blocks from more than one array of photosensors are multiplexed onto the charge shift register.

6. The method of claim 5, further comprising:
shifting charges, within the charge shift register, at a lower than normal shift rate.

7. A method of scanning, comprising:
transferring charges, from a block of photosensors in an array of photosensors (400), to a charge shift register (404), wherein the block comprises less than all the photosensors, and only the charges from the block are transferred;
repeating the step of transferring charges until the charge shift register is filled with charges only from the block of photosensors.

8. The method of claim 7, further comprising:
shifting charges, within the charge shift register, at a lower than normal shift rate.
